# EUROPÄISCHE PATENTSCHRIFT

(11) **EP 2 106 534 B1**
(45) Veröffentlichungstag und Bekanntmachung des Hinweises auf die Patenterteilung: **15.09.2010**
(21) Anmeldenummer: 07822437.5
(22) Anmeldetag: 09.11.2007
(51) Int. Cl.: G01D 5/244, G01D 5/245, F02D 41/34, G01P 13/04

(54) **VERFAHREN ZUR INKREMENTELLEN ERMITTLUNG EINES DREHWINKELS EINER WELLE**
METHOD FOR INCREMENTALLY DETERMINING AN ANGLE OF ROTATION OF A SHAFT
PROCÉDÉ POUR DÉTERMINER UN ANGLE DE ROTATION D'UN ARBRE PAR INCRÉMENTATION

(30) Priorität: 27.12.2006 DE 102006061575
(43) Veröffentlichungstag der Anmeldung: 07.10.2009
(73) Patentinhaber: Robert Bosch GmbH, 70442 Stuttgart (DE)
(72) Erfinder: ROLEW, Eduard, 70499 Stuttgart (DE); KASSNER, Uwe, 71696 Moeglingen (DE)
(86) Internationale Anmeldenummer: PCT/EP2007/062148
(87) Internationale Veröffentlichungsnummer: WO 2008/080677

(56) Entgegenhaltungen:
- DE-A1-102004 011 807
- DE-A1-102004 015 037
- DE-A1-102004 061 808

## Beschreibung

### Stand der Technik

Die vorliegende Erfindung betrifft ein Verfahren zur Codierung eines Ausgangssignals eines Gebers nach dem Oberbegriff des Anspruchs 1 sowie einen Geber für eine Vorrichtung zur Bestimmung eines Drehwinkels einer Welle nach dem Oberbegriff des Anspruchs 3 und ein Computerprogramm zur Durchführung eines der vorgenannten Verfahren.

Für die Steuerung von Verbrennungskraftmaschinen ist die Bestimmung des Kurbelwellenwinkels einer der zentralen Aufgaben. Bekannte Lösungen verwenden inkrementale Geber an Kurbel- und Nockenwelle. Die üblichen Geberscheiben mit Inkrementmarken, die ein Zusammenwirken der Signale von Kurbel- und Nockenwellengeber einer Bestimmung des Kurbelwellenwinkels ermöglichen. Eine weitere Verbesserung der Steuerung einer Brennkraftmaschine wird erreicht, wenn die Kurbelwellenposition beim Abstellen der Brennkraftmaschine exakt erfasst wird. Dadurch ist es möglich, den Widerstart der Brennkraftmaschine wesentlich zu beschleunigen mit positiver Wirkung auf Komfort und Abgasemission. Bei Abstellen der Brennkraftmaschine kann ein Pendeln der Kurbelwelle auftreten, d.h. eine abwechselnde Bewegung in beide Drehrichtungen bis zum Stillstand. Gegenwärtig in Brennkraftmaschinen eingesetzte Geber können die Drehrichtung im Allgemeinen nicht erkennen und sind somit auch nicht in der Lage, die Absolutposition der Kurbelwelle zuverlässig zu bestimmen.

Eine Erweiterung des Kurbelwellenwinkelgebers um eine Drehrichtungserkennung ist prinzipiell möglich. Dazu sind mindestens zwei Sensorelemente in einem Gebergehäuse geeignet anzuordnen. Aus der zeitlichen Beziehung der Sensorsignale kann dann die Drehrichtung ermittelt werden. Derartige Geber mit zwei Sensorelementen (Geberelementen) sind als Differentialgeber an sich bekannt. Geber ohne Drehrichtungserkennung haben einen Ausgang, d.h. insgesamt drei Anschlüsse (Versorgungsspannung, Masse, Signalausgang). Geber mit Drehrichtungserkennung enthalten häufig zwei Signalausgänge. In einer Ausführungsform werden die Signale der beiden Sensorelemente herausgeführt, in einer anderen Ausführungsform ist ein Ausgang für die Zahnfrequenzinformationen und der andere Ausgang für die Drehrichtungsinformation vorgesehen. Des Weiteren ist es bekannt, eine Signalcodierung zu wählen, die Zahnfrequenz und Drehrichtung über nur einen Anschluss überträgt. Eine derartige Signalcodierung erfolgt dabei durch die Pulslänge des Signals. Das Signal ist somit pulsweitenmoduliert und enthält zwei verschiedene Pulslängen PL 1 und PL2, die jeweils die Rechts- bzw. Linksdrehung repräsentieren. Jedes Passieren einer steigenden Zahlenflanke löst sich je nach Drehrichtung die Ausgabe der Pulsform PL1 oder PL2 aus.

Entsprechende Verfahren bzw. Vorrichtungen zur Drehrichtungskodierung finden sich in den Schriften DE102004 061808 A1, DE102004015037 A1, DE102004011807 A1.

Problematisch ist, dass bei einer Drehrichtungsumkehr je nach Lage des Drehrichtungsumkehrpunkte während eines Zahnes oder einer Zahnlücke, die jeweils an dem Geber vorbeigeführt werden, ein systematischer Fehler bei der inkrementellen Winkelbestimmung auftritt.

### Offenbarung der Erfindung

Eine Aufgabe der vorliegenden Erfindung ist es daher, ein Verfahren der eingangs genannten Art sowie einen Geber und ein Computerprogramm bereitzustellen, die eine genauere Erfassung des absoluten Drehwinkels einer Welle ermöglichen.

Dieses Problem wird gelöst durch ein Verfahren zur inkrementellen Ermittlung eines Drehwinkels einer Welle, insbesondere einer Kurbelwelle einer Brennkraftmaschine, wobei die Welle mit einem Geberrad mit Zähnen und Zahnlücken verbunden ist und dem Geberrad mindestens ein Geber zugeordnet ist, wobei der Geber ein Rechtecksignal, das einen ersten Wert oder einen zweiten Wert annehmen kann, als Ausgangssignal erzeugt, und wobei eine Signalflanke einer Zahnflanke zugeordnet ist und die zeitliche Lage einer Gegenflanke relativ zu der Flanke eine Drehrichtung kodiert, wobei durch die zeitliche Lage der Gegenflanke relativ zu der Flanke eine Zuordnung eines Drehrichtungsumkehrpunktes zu einem Zahn des Geberrades oder eine Zahnlücke des Geberrades kodiert werden, wobei der Drehwinkel durch Addition eines Inkrements bei jeder Signalflanke zu einem Zähler ermittelt wird, wobei nach einer Drehrichtungsumkehr während ein Zahn an dem Geber vorbeigeführt wird einmalig ein halbes Inkrement mit einem Vorzeichen der Drehrichtung nach Drehrichtungsumkehr inkrementiert wird und dass bei einer Drehrichtungsumkehr während eine Zahnlücke an dem Geber vorbeigeführt wird einmalig ein halbes Inkrement mit einem Vorzeichen der Drehrichtung vor der Drehrichtungsumkehr inkrementiert wird. Ein Inkrement ist hier abhängig von der Anzahl der Inkrementmarken auf dem Geberrad, üblicherweise haben Geberräder eine Teilung von 6°, damit ist das Inkrement auch jeweils 6°. Unter Flanke und Gegenflanke werden hier steigende bzw. fallende Flanken des Ausgangssignals des Gebers verstanden, je nach Codierung kann eine Flanke sowohl eine steigende als auch eine fallende Flanke sein, gleiches gilt für die Gegenflanke. Ist die Flanke eine steigende Flanke, so ist die Gegenflanke eine fallende Flanke und umgekehrt. Das eingangs genannte Problem wird auch gelöst durch ein Verfahren zur Kodierung eines Ausgangssignals eines Gebers einer Vorrichtung zur Bestimmung eines Drehwinkels einer Welle, insbesondere einer Kurbelwelle einer Brennkraftmaschine, wobei die Welle mit einem Geberrad mit Zähnen und Zahnlücken verbunden ist und dem Geberrad mindestens ein Geber zugeordnet ist, wobei der Geber ein Rechtecksignal, das einen ersten Wert oder einen zweiten Wert annehmen kann, als Ausgangssignal erzeugt, und wobei eine Signalflanke einer Zahnflanke zugeordnet ist und die zeitliche Lage einer Gegenflanke relativ zu der Flanke eine Drehrichtung kodiert, wobei durch die zeitliche Lage der Gegenflanke relativ zu der Flanke zusätzliche Informationen zur Winkellage der Drehrichtungsumkehr kodiert werden.

Erfindungsgemäß ist vorgesehen, dass die zusätzliche Information zur Winkellage der Drehrichtungsumkehr eine Zuordnung eines Drehrichtungsumkehrpunktes zu einem Zahn des Geberrades oder einer Zahnlücke des Geberrades umfasst. Der Drehrichtungsumkehrpunkt ist der Winkel, bei einer Kurbelwelle z.B. der Kurbelwellenwinkel, zu dem die Drehrichtungsumkehr stattfindet. Erfindungsgemäß ist weiter vorgesehen, dass sowohl die Drehrichtung als auch die Zuordnung des Drehrichtungsumkehrpunktes zu einem Zahn oder eine Zahnlücke durch die Pulsweite des Ausgangssignals des Gebers codiert werden. Das Ausgangssignal des Gebers umfasst vorzugsweise vier verschiedene Pulsweiten, mit denen jeweils zwei verschiedene Drehrichtungen und die beiden Möglichkeiten der Drehrichtungsumkehr, nämlich der Drehrichtungsumkehr während eines Zahnes oder einer Zahnlücke, codiert werden.

Das eingangs genannte Problem wird auch gelöst durch einen Geber für eine Vorrichtung zur Bestimmung eines Drehwinkels einer Welle, insbesondere einer Kurbelwelle einer Brennkraftmaschine, mit Mitteln zur Kodierung eines Ausgangssignals des Gebers (6), wobei die Welle mit einem Geberrad mit Zähnen und Zahnlücken verbunden ist und dem Geberrad mindestens ein Geber zugeordnet ist, wobei der Geber ein Rechtecksignal, das einen ersten Wert oder einen zweiten Wert annehmen kann, als Ausgangssignal erzeugt, und wobei eine der Signalflanken einer Zahnflanke zugeordnet ist und die zeitliche Lage einer Signalgegenflanke relativ zu der Signalflanke eine Drehrichtung kodiert, wobei durch die zeitliche Lage der Gegenflanke relativ zu der Flanke zusätzliche Informationen zur Winkellage der Drehrichtungsumkehr kodiert werden. Vorzugsweise ist vorgesehen, dass der Geber ein Differentialgeber mit zwei Geberelementen ist.

Das eingangs genannte Problem wird auch gelöst durch ein Computerprogramm mit Programmcodes zur Durchführung aller Schritte nach einem erfindungsgemäßen Verfahren wenn das Programm in einem Computer ausgeführt wird.

### Kurze Beschreibung der Zeichnungen

Nachfolgend wird ein Ausführungsbeispiel der vorliegenden Erfindung anhand der beiliegenden Zeichnungen näher erläutert. Dabei zeigen:
- Fig. 1: eine Skizze eines Geberrades mit zugeordnetem Geber;
- Fig. 2: Signale mit variablen Pulslängen;
- Fig. 3: Eine Skizze zur Bestimmung des absoluten Kurbelwellenwinkels;
- Fig. 4: Skizzen der Signale PL 1 und PL2 bei der Drehrichtungsumkehr;
- Fig. 5: Skizzen der Signale PL1und PL2 bei der Drehrichtungsumkehr;
- Fig. 6: Skizzen der Signale PL1, PL2, PL3 und PL4 bei der Drehrichtungsumkehr;
- Fig. 7: Skizzen der Signale PL1, PL2, PL3 und PL4 bei der Drehrichtungsumkehr.

### Ausführungsform der Erfindung

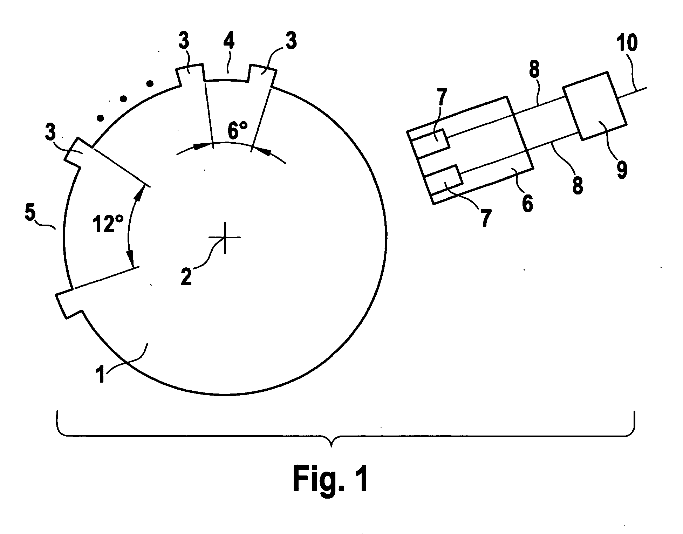

Fig. 1 zeigt eine Skizze eines an sich bekannten Geberrades 1, das mit einer hier nicht dargestellten Kurbelwelle einer Brennkraftmaschine verbunden ist und bei einer Rotation der Kurbelwelle um eine Achse 2 rotiert. Das Geberrad 1 weist Geberradmarken (Markierungen) auf, die durch eine abwechselnde Anordnung von Zähnen 3 und Zahnlücken 4 gebildet werden. Der Abstand zwischen aufeinander folgenden Paaren von Zähnen 3 und Zahnlücken 4 beträgt 6°. Die Zähne 3 und die Zahnlücken 4 können sich über einen gleichen Winkelbereich von 3° erstrecken, können aber auch asymmetrisch aufgeteilt sein, beispielsweise indem ein Zahn 3 einen Winkelbereich von 2° und eine Zahnlücke 4 einen Winkelbereich von 4° überdeckt. Eine Geberradlücke 5 wird gebildet, indem durch Weglassen eines Zahnes 3 eine Geberradlücke 5 mit einem Winkel von 12° entsteht.

Dem Geberrad 1 ist ein Geber 6 zugeordnet. Der Geber 6 umfasst zwei Geberelemente 7, die beispielsweise Hall-Elemente, induktive Geber oder dergleichen sein können. Die Geberelemente 7 liefern über Signalleitungen 8 elektrische Signale, von denen in einer Auswertelogik 9 ein Differenzsignal gebildet wird, das über eine Signalleitung 10 an ein nicht dargestelltes Steuergerät der Brennkraftmaschine übertragen wird. Das Vorbeiführen von Zähnen 3 und Zahnlücken 4 an den Geberelementen 7 erzeugt Spannungsänderungen an Ausgängen der Geberelemente 7, die über die Signalleitungen 8 zur Auswertelogik 9 weitergegeben werden. Die Geberelemente 7 sind in Umfangsrichtung des Geberrades 1 versetzt angeordnet, so dass ein Zahn 3 oder eine Zahnlücke 4 bei einer Rotation des Geberrades 1 zeitlich versetzt zunächst an einem der beiden Geberelemente 7 und dann an dem anderen der beiden Geberelemente 7 vorbeigeführt wird.

Üblicherweise werden von den steigenden und fallenden Flanken nur die steigenden Flanken benutzt, sprich die Flanken beim Übergang von einer Zahnlücke 4 zu einem Zahn 3. Die fallende Flanke wird nicht benutzt. Die steigende Flanke wird nachfolgende als Synonym für einen Übergang von einer Zahnlücke 4 zu einem Zahn 3 verstanden, der von dem Geber 6 in ein entsprechendes elektrisches Signal umgewandelt wird. Entsprechend wird unter einer fallenden Flanke der Übergang von einem Zahn 3 zu einer Zahnlücke 4 verstanden, wobei dieser Übergang von dem Geber 6 wiederum in ein elektrisches Signal gewandelt wird. Ob das elektrische Signal nun bei einer steigenden Flanke von high zu low oder von low zu high übergeht, liegt an der elektrischen Ausgestaltung, wesentlich ist hier nicht die elektrische Definition der steigenden und fallenden Flanke, sondern die Zuordnung des elektrischen Signals zu dem geometrischen Übergang Zahn zu Zahnlücke.

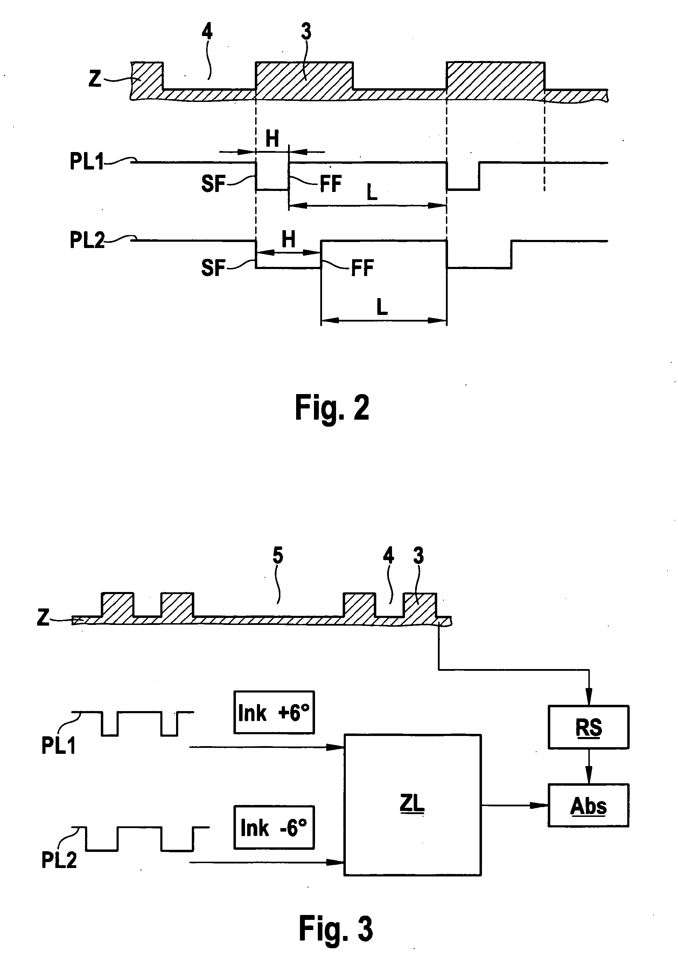

Da nur die steigenden Flanken aus Genauigkeitsgründen von nachfolgenden Steuergerätefunktionen ausgewertet werden, wird die fallende Flanke zur Kodierung der Drehrichtung der Kurbelwelle verwendet. Eine an sich bekannte Lösung zur Übertragung dieser Information an ein Motorsteuergerät ist eine variable Pulslänge wie diese in Fig. 2 dargestellt ist. Die Richtungsinformation wird also übertragen durch die Pulslänge des übertragenden Signals. Die steigenden Flanken SF werden ohne Verzögerung und weitere Verarbeitung des Signals übertragen, sobald also bei einem Differentialgeber ein Zahn 3 des Geberrades 1 den Geber 6 etwa mittig überstrichen hat wird die steigende Flanke an der Signalleitung übertragen. Die fallende Flanke FF überträgt einzig die Information zur Drehrichtung. Das Verhältnis der Werte High H zu Low L ist in Fig. 2 erläutert. Das Signal zwischen einer steigenden Flanke SF und einer fallenden Flanke FF ist der High-Wert H, das Signal zwischen einer fallenden Flanke FF und einer steigenden Flanke SF ist der Low-Wert L. Die Linie Z zeigt einen Teil einer Abwicklung des Geberrades. Bei dem als PL1 bezeichneten Signal in Fig. 2 hat ein Pulsweitenverhältnis P = (Zeitdauer des High-Wertes H) geteilt durch (Zeitdauer des Low-Wertes L) einen Wert deutlich kleiner eins, das darunter dargestellte Signal PL2 ergibt für das Pulsweitenverhältnis einen Wert deutlich größer eins. Durch die unterschiedlichen Pulsweitenverhältnisse P = H/L kann so eine Information zur Drehrichtung von dem Geber 6 an ein Steuergerät übertragen werden.

In den nachfolgenden Darstellungen sind die Pulslängen als Zeit des Signals auf niedrigem Pegel zu verstehen, die Zuordnung ist hier natürlich auch zur anderen Zahnflanke möglich, ebenso kann die Pulslänge auch als Zeit auf hohem Signalpegel definiert werden. Genau genommen ist die Periode des Gebersignals weiterhin gleich zur Periode des Zahnsignals, nur das Tastverhältnis ist eine Variable der Drehrichtung. Die gesamte Signalverarbeitung ist in einem integrierten Schaltkreis mit den Sensorelementen (Geberelementen) zusammen integriert und bereits in den Drehzahlgeber eingebaut. Fig. 3 zeigt eine Skizze zur Bestimmung des Drehwinkels der Kurbelwelle, dies ist der absolute Kurbelwellenwinkel Abs. Wird die Geberradlücke 5 bzw. die Symmetrielücke 11 bei einer asymmetrischen Teilung des Geberrades 1 erkannt, so wird durch ein Modul RS der Drehwinkel Abs auf 0° KW gesetzt. Der Drehwinkel ABS wird durch einen Zähler ZL inkrementell gebildet, und zwar indem mit jeder steigenden Flanke bei Anliegen eines Signals PL1 gemäß Fig. 2 der Zähler um ein Inkrement Ink von +6° erhöht wird und bei Anliegen des Signals PL2 gemäß Fig. 2 der Zähler ZL bei der steigenden Flanke SF um ein Inkrement Ink von -6° reduziert wird. Bei einer Drehrichtungsumkehr der Kurbelwelle ändert sich die Zuordnung der steigenden bzw. fallenden Flanke zu den Zahnflanken. Ändert sich die Drehrichtung, so werden die bisherigen Zahnflanken, die einer steigenden Flanke des elektrischen Signals zugeordnet sind, zu fallenden Flanken, damit wird entsprechend eine fallende Flanke des elektrischen Signals zugeordnet. Bei einer Drehrichtungsumkehr muss der Wert des Kurbelwellenwinkels einmalig um ein Inkrement von 3° korrigiert werden, um die Verschiebung der signalauslösenden Zahnflanke zu berücksichtigen. Es zeigt sich, dass die Korrektur bei Umkehr der Drehrichtung auf einem Zahn -3° betragen muss. Der Winkelzähler enthält dann die Werte 3°, 9°, 15°, 12°, 6°, ..., wobei hier eine Drehrichtungsumkehr zwischen den Stellungen 15° und 12° stattgefunden hat. Bei Umkehr der Drehrichtung in einer Lücke beträgt die Korrektor +3°, der Winkelzähler enthält dann z.B. die Werte 3°, 9°, 15°, 18°, 12°, 6°, ..., wobei hier eine Drehrichtungsumkehr zwischen 15° und 18° stattgefunden hat. Um die korrekte Winkelbestimmung des Drehwinkels Abs zu ermöglichen, ist erfindungsgemäß eine Erweiterung der bekannten Informationsverarbeitung vom Kurbelwellenwinkelgeber zum Motorsteuergerät vorgesehen. Erfindungsgemäß ist vorgesehen, zwei weitere Pulslängen PL3 und PL4 zu verwenden, die die Information über den Ort der Drehrichtungsumkehr, also ein Zahn oder eine Zahnlücke, codiert enthalten.

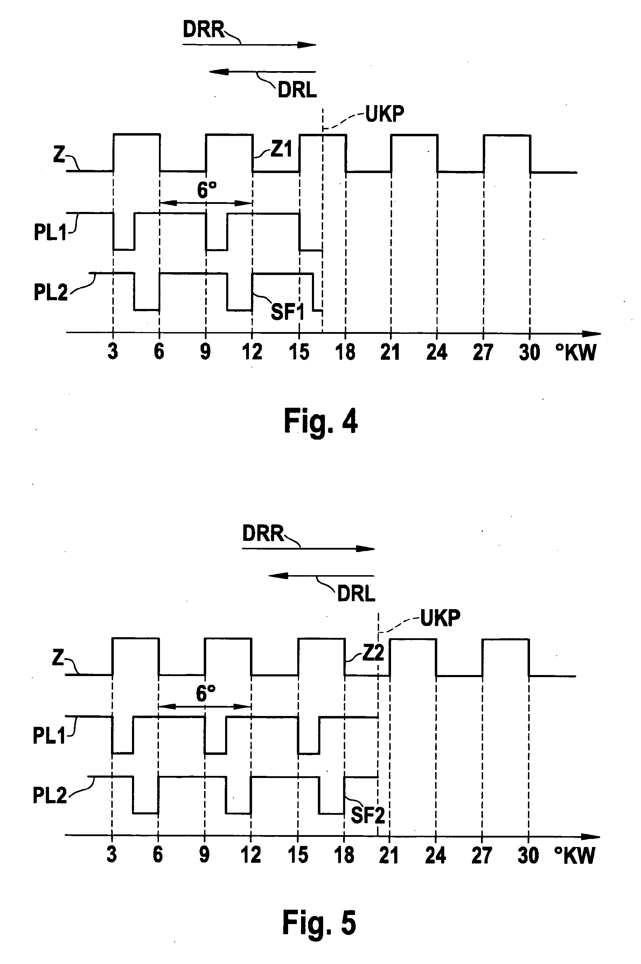

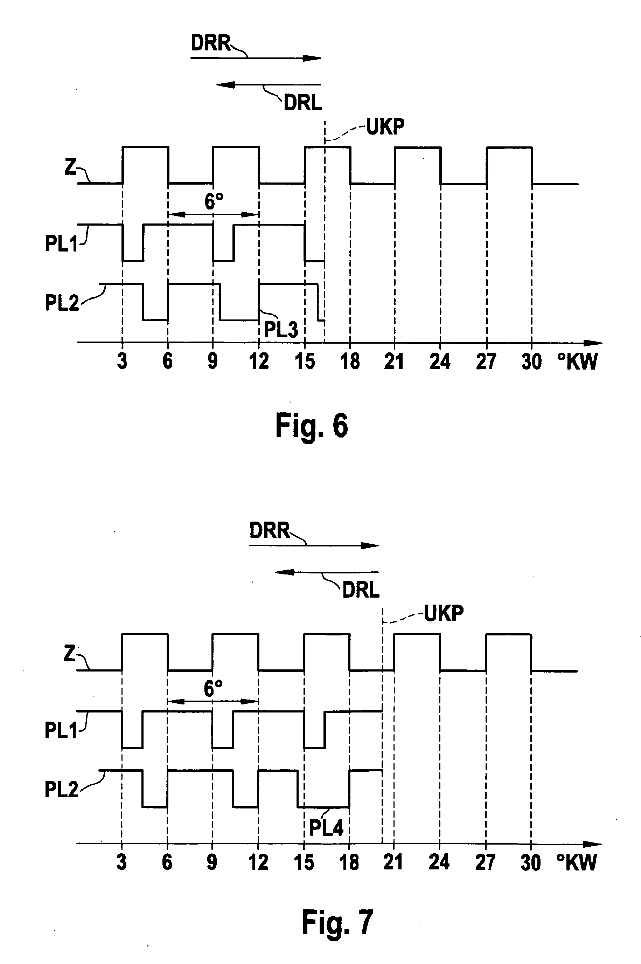

Fig. 4 und 5 zeigen Skizzen der Signale PL1 bzw. PL2 bei der Drehrichtungsumkehr, wobei Fig. 4 eine Drehrichtungsumkehr während eines Zahnes darstellt, und Fig. 5 die Drehrichtungsumkehr während einer Zahnlücke darstellt. In Fig. 4 wie Fig. 5 wird jeweils davon ausgegangen, dass zunächst die Drehrichtung rechts DRR vorliegt, und diese an einem Umkehrpunkt UKP sich jeweils zur Drehrichtung links DRL kehrt. Zunächst wird bei 3°, 9° sowie 15° jeweils eine steigende Flanke SF des Signals PL1 ausgelöst, die jeweils den Zähler ZL gemäß Fig. 3 um ein Inkrement von +6° erhöhen. In Fig. 4 findet eine Drehrichtungsumkehr bei etwa 16° Kurbelwellenwinkel statt, also während der Geber 6 einen Zahn 3 detektiert. Dadurch wird die nächste steigende Flanke, diese ist in dem Signal PL2 mit SF1 bezeichnet, erst durch den in Fig. 4 mit Z1 bezeichneten Zahn ausgelöst. Im Stand der Technik würde der bei 15°KW stehende Zähler nunmehr um -6° inkrementiert, so dass statt eines korrekten Wertes von 12°KW ein Wert von 9°KW herauskäme. Daher wird das Inkrement einmalig statt mit -6° mit -3° festgelegt. Fig. 5 zeigt eine Drehrichtungsumkehr während einer Zahnlücke. Auch hier wird zunächst die Drehrichtung rechts DRR angenommen, wobei der Zähler ZL bei 3°, 9° sowie 15° Kurbelwellenwinkel jeweils um ein Inkrement von 6° durch das Signal PK1 inkrementiert wird. Die Drehrichtungsumkehr findet während einer Zahnlücke bei etwa 20° Kurbelwellenwinkel statt. In diesem Augenblick steht der Zähler ZL bei 18° Kurbelwelle. Das nächste Inkrement durch das Signal PL2 wird in diesem Fall durch die Zahnflanke Z2 ausgelöst, dieser ist der steigenden Flanke SF2 des Signals PL2 zugeordnet. Durch die Signalflanke SF2 wird der Zähler ZL nun um +3° inkrementiert. Die Fig. 6 und 7 zeigen die erfindungsgemäße Erweiterung des Signals des Gebers 6 um zwei weitere Pulslängen PL3 und PL4. Die Pulslänge PL3 wird bei einer Drehrichtungsumkehr während eines Zahnes übertragen, die Pulslänge PL4 wird bei einer Drehrichtungsumkehr während einer Zahnlücke übertragen. Wird die Pulslänge PL3 übertragen, so erfolgt eine Inkrementierung des Zählers ZL um -3°, wird die Pulslänge PL4 übertragen, so erfolgt eine Inkrementierung des Zählers ZL um +3°. Die Pulse PL3 bzw. PL4 werden einmalig unmittelbar nach der Drehrichtungsumkehr übertragen, danach liegen je nach Drehrichtung wieder die Pulse PL1 bzw. PL2 an.

## Patentansprüche

1. Verfahren zur Kodierung eines Ausgangssignals eines Gebers (6) einer Vorrichtung zur Bestimmung eines Drehwinkels einer Welle, insbesondere einer Kurbelwelle einer Brennkraftmaschine, wobei die Welle mit einem Geberrad (1) mit Zähnen (3) und Zahnlücken (4) verbunden ist und dem Geberrad (1) mindestens ein Geber (6) zugeordnet ist, wobei der Geber (6) ein Rechtecksignal, das einen ersten Wert oder einen zweiten Wert annehmen kann, als Ausgangssignal erzeugt, und wobei eine Signalflanke einer Zahnflanke zugeordnet ist und die zeitliche Lage einer Gegenflanke relativ zu der Flanke eine Drehrichtung kodiert, **dadurch gekennzeichnet, dass** durch die zeitliche Lage der Gegenflanke relativ zu der Flanke zusätzliche Informationen zur Winkellage der Drehrichtungsumkehr kodiert werden, dass die zusätzliche Information zur Winkellage der Drehrichtungsumkehr eine Zuordnung eines Drehrichtungsumkehrpunktes zu einem Zahn des Geberrades oder einer Zahnlücke des Geberrades umfasst und dass sowohl die Drehrichtung als auch die Zuordnung des Drehrichtungsumkehrpunktes zu einem Zahn oder einer Zahnlücke durch die Pulsweite des Ausgangssienals des Gebers kodiert werden.

2. Verfahren nach Anspruch 1, **dadurch gekennzeichnet, dass** das Ausgangssignal vier verschiedene Pulsweiten umfasst.

3. Geber für eine Vorrichtung zur Bestimmung eines Drehwinkels einer Welle, insbesondere einer Kurbelwelle einer Brennkraftmaschine, mit Mitteln zur Kodierung eines Ausgangssignals des Gebers (6), wobei die Welle mit einem Geberrad (1) mit Zähnen (3) und Zahnlücken (4) verbunden ist und dem Geberrad (1) mindestens ein Geber (6) zugeordnet ist, wobei der Geber (6) ausgebildet ist, ein Rechtecksignal, das einen ersten Wert oder einen zweiten Wert annehmen kann, als Ausgangssignal zu erzeugen, und wobei eine der Signalflanken einer Zahnflanke zugeordnet ist und die zeitliche Lage einer Signalgegenflanke relativ zu der Signalflanke eine Drehrichtung kodiert, **dadurch gekennzeichnet, dass** durch die zeitliche Lage der Gegenflanke relativ zu der Flanke zusätzliche Informationen zur Winkellage der Drehrichtungsumkehr kodiert werden, dass die zusätzliche Information zur Winkellage der Drehrichtungsumkehr eine Zuordnung eines Drehrichtungsumkehrpunktes zu einem Zahn des Geberrades oder einer Zahnlücke des Geberrades umfasst und dass sowohl die Drehrichtung als auch die Zuordnung des Drehrichtungsumkehrpunktes zu einem Zahn oder einer Zahnlücke durch die Pulsweite des Ausgangssignals des Gebers kodiert werden.

4. Geber nach Anspruch 3, **dadurch gekennzeichnet, dass** dieser ein Differenzial-Geber mit zwei Geberelementen ist.

5. Computerprogramm mit Programmcode zur Durchführung aller Schritte nach einem der Ansprüche 1 oder 2, wenn das Programm in einem Computer ausgeführt wird.

## Claims

1. Method for coding an output signal from a sensor (6) of an apparatus for determining an angle of rotation of a shaft, in particular of a crankshaft of an internal combustion engine, the shaft being connected to a sensor wheel (1) having teeth (3) and tooth gaps (4), and at least one sensor (6) being assigned to the sensor wheel (1), the sensor (6) generating, as an output signal, a square-wave signal which can assume a first value or a second value, and a signal edge being assigned to a tooth flank, and the temporal position of an opposite edge relative to the edge coding a direction of rotation, **characterized in that** additional information relating to the angular position of the reversal of the direction of rotation is coded by the temporal position of the opposite edge relative to the edge, **in that** the additional information relating to the angular position of the reversal of the direction of rotation comprises an assignment of a point of reversal of the direction of rotation to a tooth of the sensor wheel or to a tooth gap of the sensor wheel, and **in that** both the direction of rotation and the assignment of the point of reversal of the direction of rotation to a tooth or to a tooth gap are coded by the pulse width of the output signal from the sensor.

2. Method according to Claim 1, **characterized in that** the output signal comprises four different pulse widths.

3. Sensor for an apparatus for determining an angle of rotation of a shaft, in particular of a crankshaft of an internal combustion engine, having means for coding an output signal from the sensor (6), the shaft being connected to a sensor wheel (1) having teeth (3) and tooth gaps (4), and at least one sensor (6) being assigned to the sensor wheel (1), the sensor (6) being designed to generate, as an output signal, a square-wave signal which can assume a first value or a second value, and one of the signal edges being assigned to a tooth flank, and the temporal position of an opposite signal edge relative to the signal edge coding a direction of rotation, **characterized in that** additional information relating to the angular position of the reversal of the direction of rotation is coded by the temporal position of the opposite edge relative to the edge, **in that** the additional information relating to the angular position of the reversal of the direction of rotation comprises an assignment of a point of reversal of the direction of rotation to a tooth of the sensor wheel or to a tooth gap of the sensor wheel, and **in that** both the direction of rotation and the assignment of the point of reversal of the direction of rotation to a tooth or to a tooth gap are coded by the pulse width of the output signal from the sensor.

4. Sensor according to Claim 3, **characterized in that** the sensor is a differential sensor with two sensor elements.

5. Computer program with program code for carrying out all of the steps according to either of Claims 1 and 2, if the program is executed in a computer.

## Revendications

1. Procédé d'encodage d'un signal de sortie d'un capteur (6) d'un dispositif destiné à déterminer un angle de rotation d'un arbre, notamment d'un vilebrequin d'un moteur à combustion interne, l'arbre étant connecté à une roue de détection (1) munie de dents (3) et d'espace entre dents (4), et la roue de détection (1) étant associée à au moins un capteur (6), le capteur (6) produisant en tant que signal de sortie un signal rectangulaire qui peut prendre une première valeur ou une deuxième valeur, un flanc de signal étant associé à un flanc de dent et la position dans le temps d'un flanc conjugué par rapport au flanc encodant un sens de rotation, **caractérisé en ce que** par la position dans le temps du flanc conjugué par rapport au flanc, des informations supplémentaires relatives à la position angulaire de l'inversion de sens de rotation sont encodées, **en ce que** les informations supplémentaires relatives à la position angulaire de l'inversion de sens de rotation comprennent une affectation d'un point d'inversion de sens de rotation à une dent de la roue de détection ou à un espace entre dents de la roue de détection et **en ce que** le sens de rotation ainsi que l'affectation du point d'inversion du sens de rotation à une dent ou à un espace entre dents sont encodés par la largeur d'impulsion du signal de sortie du capteur.

2. Procédé selon la revendication 1, **caractérisé en ce que** le signal de sortie comprend quatre largeurs d'impulsion différentes.

3. Capteur pour un dispositif destiné à déterminer un angle de rotation d'un arbre, notamment d'un vilebrequin d'un moteur à combustion interne, comprenant des moyens pour l'encodage d'un signal de sortie du capteur (6), l'arbre étant connecté à une roue de détection (1) avec des dents (3) et des espaces entre dents (4), et au moins un capteur (6) étant associé à la roue de détection (1), le capteur (6) étant réalisé pour produire en tant que signal de sortie un signal rectangulaire qui peut adopter une première valeur ou une deuxième valeur et l'un des flancs du signal étant associé à un flanc de dent et la position dans le temps d'un flanc conjugué par rapport au flanc encodant un sens de rotation, **caractérisé en ce que** par la position dans le temps du flanc conjugué par rapport au flanc, des informations supplémentaires relatives à la position angulaire de l'inversion de sens de rotation sont encodées, **en ce que** les informations supplémentaires relatives à la position angulaire de l'inversion de sens de rotation comprennent une affectation d'un point d'inversion de sens de rotation à une dent de la roue de détection ou à un espace entre dents de la roue de détection et **en ce que** le sens de rotation ainsi que l'affectation du point d'inversion du sens de rotation à une dent ou à un espace entre dents sont encodés par la largeur d'impulsion du signal de sortie du capteur.

4. Capteur selon la revendication 3, **caractérisé en ce que** celui-ci est un capteur différentiel avec deux éléments de capteur.

5. Programme informatique comprenant un code programme pour mettre en oeuvre toutes les étapes selon l'une quelconque des revendications 1 ou 2, lorsque le programme est exécuté dans un ordinateur.
